# FASCICULE DE BREVET EUROPEEN

(11) **EP 1 572 505 B1**
(45) Date de publication et mention de la délivrance du brevet: **12.06.2013**
(21) Numéro de dépôt: 03799668.3
(22) Date de dépôt: 19.12.2003
(51) Int. Cl.: B60R 21/34

(54) **DISPOSITIF POUR PROTEGER LES PIETONS EN CAS DE CHOC AVEC UN VEHICULE**
VORRICHTUNG ZUM SCHUTZ VON FÜSSGÄNGERN BEI EINEM FRONTALAUFPRALL AUF EIN KRAFTFAHRZEUG
DEVICE FOR PROTECTING PEDESTRIANS IN A COLLISION WITH A VEHICLE

(30) Priorité: 19.12.2002 FR 0216202
(43) Date de publication de la demande: 14.09.2005
(73) Titulaire: VALEO SYSTEMES THERMIQUES, 78320 Le Mesnil Saint-Denis (FR)
(72) Inventeur: LAUDIJOIS, Guillaume, B139LJ Birmingham (GB)
(74) Mandataire: Rolland, Jean-Christophe
(86) Numéro de dépôt international: PCT/FR2003/003842
(87) Numéro de publication internationale: WO 2004/056620

(56) Documents cités:
- EP-A- 1 138 557
- DE-A- 10 063 582
- DE-A- 10 116 284
- PATENT ABSTRACTS OF JAPAN vol. 2002, no. 06, 4 juin 2002 (2002-06-04) & JP 2002 037129 A (ISUZU MOTORS LTD), 6 février 2002 (2002-02-06)
- PATENT ABSTRACTS OF JAPAN vol. 2002, no. 05, 3 mai 2002 (2002-05-03) & JP 2002 019641 A (TOYOTA MOTOR CORP), 23 janvier 2002 (2002-01-23)
- PATENT ABSTRACTS OF JAPAN vol. 2002, no. 08, 5 août 2002 (2002-08-05) & JP 2002 096710 A (NISSAN MOTOR CO LTD), 2 avril 2002 (2002-04-02)

## Description

L'invention concerne la protection des piétons en cas de choc contre un véhicule. ,

En cas de collision entre une automobile et un piéton, lorsque le piéton est projeté sur le capot moteur, celui-ci doit s'enfoncer pour limiter les blessures subies par le piéton. Cependant, pour l'occupation optimale de l'espace du compartiment moteur, et pour l'efficacité du refroidissement, il est fréquent qu'une faible distance soit disponible entre le capot et un échangeur de chaleur logé dans le compartiment moteur, ce qui nuit à la possibilité de déformation du capot en cas de choc.

Le but de l'invention est de permettre une déformation suffisante du capot malgré la présence d'un composant rigide tel qu'un échangeur de chaleur à proximité de celui-ci. Le document EP-A-1 138 557 représente l'état de la technique auquel il est fait référence dans le préambule de la revendication 1.

L'invention vise notamment un dispositif monté sur un véhicule pour protéger les piétons en cas de choc contre le véhicule, celui-ci comportant un compartiment séparé de l'extérieur du véhicule par une paroi déformable sous l'effet d'un choc, dans lequel un composant rigide est logé - dans une position normale au voisinage de ladite paroi.

Le dispositif selon l'invention comprend :
- un détecteur de position de la paroi disposé à l'intérieur du compartiment à proximité immédiate de la paroi, propre à se déplacer sous la poussée de celle-ci lorsqu'elle se déforme, pratiquement sans opposer de résistance,
- des moyens de verrouillage pour maintenir le composant dans ladite position normale,
- des moyens de déverrouillage réagissant au déplacement du détecteur pour libérer les moyens de verrouillage, et
- des moyens d'entraînement agissant sur le composant pour l'éloigner de la paroi lorsque les moyens de verrouillage sont libérés.

Des caractéristiques optionnelles de l'invention, complémentaires ou de substitution, sont énoncées ci-après:
- Ledit compartiment est le compartiment moteur du véhicule.
- Ladite paroi est un capot ouvrant recouvrant le compartiment moteur.
- Le déplacement du détecteur sous la poussée de la paroi s'effectue de haut en bas, notamment par translation.
- Le déplacement du composant sous l'action des moyens d'entraînement s'effectue de haut en bas.
- Ledit composant comprend au moins un échangeur de chaleur.
- Le détecteur comprend une barre s'étendant le long de la paroi.
- Les moyens de verrouillage comprennent au moins un verrou maintenu en position de blocage par un ressort.
- Ledit verrou coulisse dans une direction sensiblement perpendiculaire à la direction de déplacement du détecteur.
- Les moyens d'entraînement agissent par détente d'au moins un ressort.
- Les moyens de déverrouillage comprennent au moins un mécanisme transformant le déplacement du détecteur en un mouvement de libération des moyens de verrouillage.
- Les moyens de déverrouillage comprennent au moins un électroaimant et un interrupteur actionné par le déplacement du détecteur pour permettre l'alimentation de l'électroaimant.

Les caractéristiques et avantages de l'invention seront exposés plus en détail dans la description ci-après, en se référant aux dessins annexés.
Les figures 1a à 1c sont des schémas de principe illustrant les différences phases du fonctionnement d'un dispositif selon l'invention, en vue de côté.
Les figures 2a à 2c sont des schémas de principe illustrant les mêmes phases de fonctionnement, en vue de face.
Les figures 3a à 3c sont des vues schématiques d'un premier mode de réalisation du dispositif, dans les phases illustrées par les figures 1a à 1c.
Les figures 4a à 4c sont des vues analogues aux figures 3a à 3c, relatives à un second mode de réalisation du dispositif.

Sur les figures la à 1c, la référence 1 désigne un module d'échange de chaleur placé dans le compartiment moteur d'une automobile qui comprend par exemple un radiateur de refroidissement du moteur d'entraînement du véhicule et un condenseur de climatisation de l'habitacle. La référence 2 désigne le capot recouvrant le compartiment moteur, dont seule est représentée la partie située au dessus du module 1 et à faible distance de celui-ci.

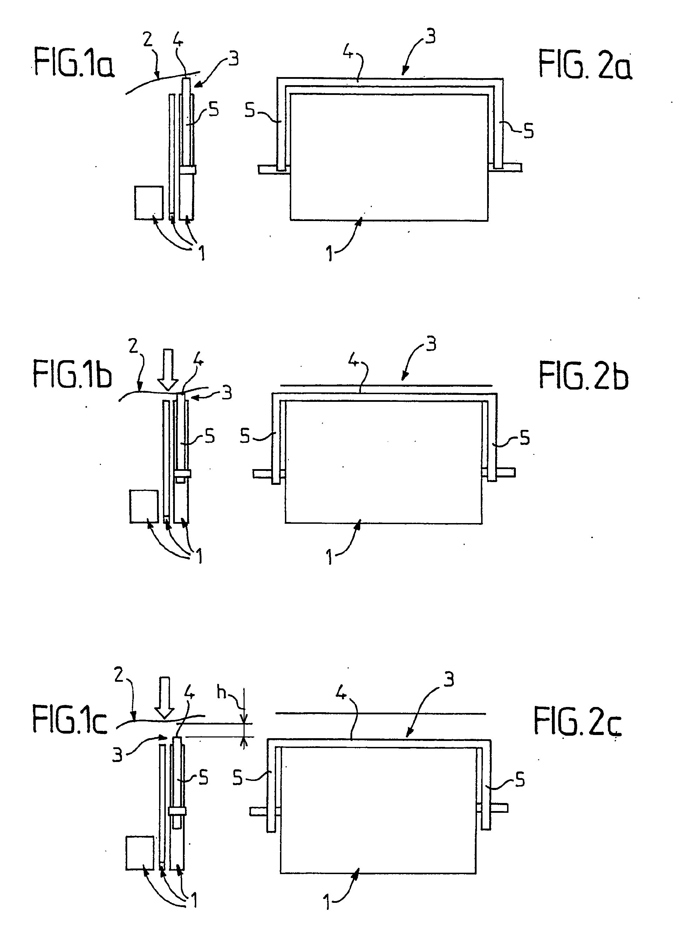

Le dispositif selon l'invention comprend un détecteur de position du capot sous forme d'une barre 3 en forme de U inversé dont le fond 4 est situé en regard du bord supérieur du module 1 et s'étend le long de ce bord à proximité immédiate du capot 2, dans la position de départ représentée sur les figures 1a et 2a. Dans l'exemple illustré, le fond 4 est rectiligne et horizontal, mais il pourrait être incliné et/ou incurvé pour s'adapter au profil du capot. Les deux branches 5 du U s'étendent verticalement le long des bords latéraux du module 1.

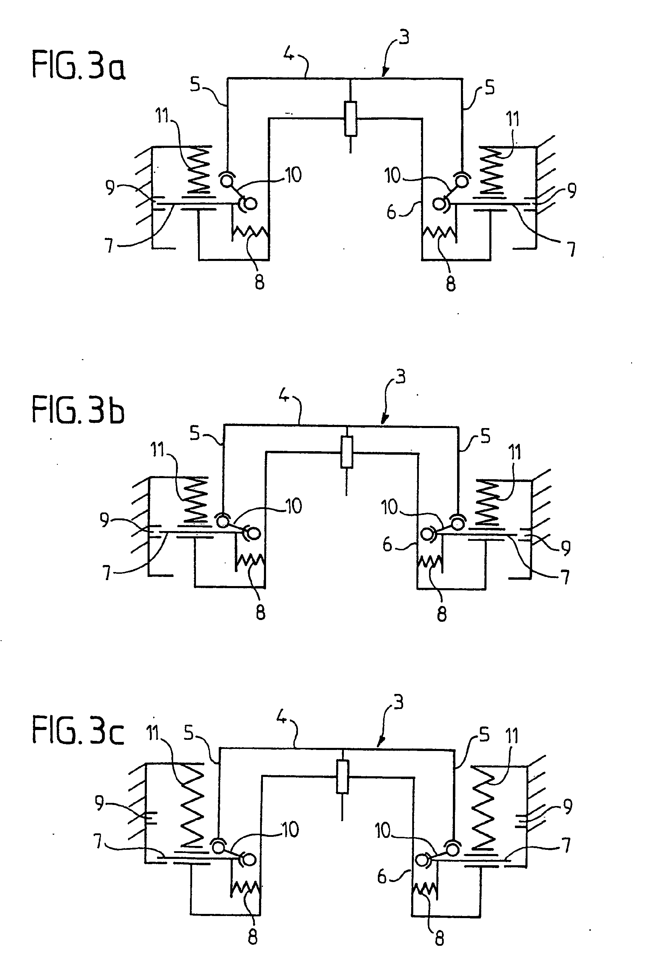

En cas de choc d'un piéton sur le capot 2, celui-ci se déforme vers le bas comme indiqué sur la figure 1b et vient pousser la barre 3 qui s'abaisse en n'opposant pratiquement aucune résistance. Ce déplacement de la barre agit sur des moyens de déverrouillage qui permettent à des moyens d'entraînement de faire descendre à son tour le module 1, libérant une hauteur supplémentaire h au-dessus de celui-ci (figure 1c) pour la déformation du capot. Les moyens de déverrouillage et les moyens d'entraînements, non représentés sur les figures la à 2c, sont décrits ci-après, en relation avec les figures 3a à 4c.

Sur les figures 3a à 3c, on retrouve la barre de détection 3 formée d'un fond supérieur 4 et de deux branches latérales verticales 5. Un module d'échange de chaleur non représenté est solidaire d'un bâti 6 lui-même fixé à la structure du véhicule, dans la position initiale représentée sur la figure 3a, par deux verrous 7 sous forme de tiges horizontales montées coulissantes sur le bâti 6. Les tiges 7 sont situées respectivement en regard des deux bords latéraux du module, chacune étant sollicitées par un ressort 8 de manière à éloigner la tige du module et à faire pénétrer son extrémité dans un logement 9 prévu sur la structure du véhicule. Lorsque la barre 3 est déplacée vers le bas par un début d'enfoncement du capot non représenté du véhicule, un mécanisme de transmission 10 reliant chaque branche 5 à la tige 7 correspondante transforme le mouvement descendant de la barre 3 en un mouvement horizontal de rétractation de la tige 7, avec compression du ressort 8 (figure 3b). Les tiges sortent alors des logements 9, permettant à deux ressorts précontraints 11 de pousser vers le bas le bâti 6 et par conséquent le module d'échange de chaleur. Les ressorts 11 sont également situés respectivement en regard des deux bords latéraux du module, chacun d'eux s'appuyant par son extrémité supérieure sur la structure du véhicule et par son extrémité inférieure sur le bâti 6.

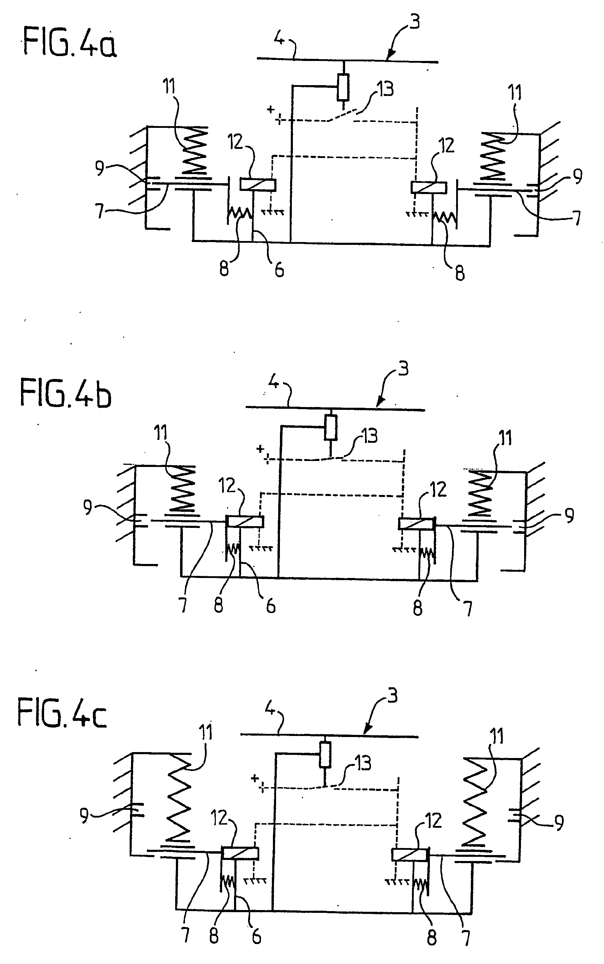

On retrouve sur les figures 4a à 4c la barre 3 dont seule la partie horizontale 4 est représentée, des branches verticales pouvant être prévues pour le guidage du coulissement de la barre. On retrouve également un bâti 6, des tiges de verrouillage 7, des ressorts 8 et 11 et des logements 9 analogues à ceux des figures 3a à 3c. Les mécanismes de déverrouillage 10 des figures 3a et 3c sont ici remplacés par des moyens électromagnétiques. À chaque tige 7 est associé un électroaimant dont la bobine 12 est fixe par rapport au bâti 6 et dont le noyau est solidaire de la tige 7. Le déplacement vers le bas de la barre 3 provoque la fermeture d'un interrupteur 13 et l'alimentation des électroaimants, lesquels entraînent la rétractation des tiges (figure 4b). L'abaissement du bâti et du module d'échange de chaleur se produit alors comme décrit en relation avec la figure 3c.

Si on le souhaite, des moyens de rétablissement non représentés peuvent être prévus sur le véhicule pour ramener le module dans sa position de fonctionnement lorsque les dommages dûs au choc ne sont pas de nature à empêcher la remise en marche du véhicule.

Bien que l'invention ait été décrite dans son application à l'escamotage d'un module d'échange de chaleur par un mouvement vertical de haut en bas, pour permettre l'enfoncement du capot moteur d'une automobile, l'homme du métier constatera sans difficulté que l'invention est utilisable pour déplacer un composant rigide quelconque dans une direction quelconque et permettre la déformation d'une paroi quelconque d'un véhicule.

## Revendications

1. Dispositif monté sur un véhicule pour protéger les piétons en cas de choc contre le véhicule, celui-ci comportant un compartiment séparé de l'extérieur du véhicule par une paroi (2) déformable sous l'effet d'un choc, dans lequel un composant rigide (1) est logé dans une position normale au voisinage de ladite paroi, **caractérisé en ce qu'**il comprend :
- un détecteur (3) de position de la paroi disposé à l'intérieur du compartiment à proximité immédiate de la paroi, propre à se déplacer sous la poussée de celle-ci lorsqu'elle se déforme, pratiquement sans opposer de résistance,
- des moyens de verrouillage (7) pour maintenir le composant dans ladite position normale,
- des moyens de déverrouillage (10) réagissant au déplacement du détecteur pour libérer les moyens de verrouillage, et
- des moyens d'entraînement (11) agissant sur le composant pour l'éloigner de la paroi lorsque les moyens de verrouillage sont libérés.

2. Dispositif selon la revendication 1, dans lequel ledit compartiment est le compartiment moteur du véhicule.

3. Dispositif selon la revendication 2, dans lequel ladite paroi est un capot ouvrant (2) recouvrant le compartiment moteur.

4. Dispositif selon l'une des revendications précédentes, dans lequel le déplacement du détecteur sous la poussée de la paroi s'effectue de haut en bas.

5. Dispositif selon l'une des revendications précédentes, dans lequel le déplacement du composant sous l'action des moyens d'entraînement s'effectue de haut en bas.

6. Dispositif selon l'une des revendications précédentes, dans lequel ledit composant comprend au moins un échangeur de chaleur.

7. Dispositif selon l'une des revendications précédentes, dans lequel le détecteur comprend une barre (3) s'étendant le long de la paroi.

8. Dispositif selon l'une des revendications précédentes, dans lequel les moyens de verrouillage comprennent au moins un verrou (7) maintenu en position de blocage par un ressort (8).

9. Dispositif selon la revendication 8, dans lequel ledit verrou coulisse dans une direction sensiblement perpendiculaire à la direction de déplacement du détecteur.

10. Dispositif selon l'une des revendications précédentes, dans lequel les moyens d'entraînement agissent par détente d'au moins un ressort (11).

11. Dispositif selon l'une des revendications précédentes, dans lequel les moyens de déverrouillage comprennent au moins un mécanisme (10) transformant le déplacement du détecteur en un mouvement de libération des moyens de verrouillage.

12. Dispositif selon l'une des revendications 1 à 10, dans lequel les moyens de déverrouillage comprennent au moins un électroaimant (12) et un interrupteur (11) actionné par le déplacement du détecteur pour permettre l'alimentation de l'électroaimant.

## Patentansprüche

1. An einem Fahrzeug angebrachte Vorrichtung zum Schutz von Fußgängern bei einem Aufprall auf das Fahrzeug, wobei dieses einen vom Äußeren des Fahrzeugs durch eine unter der Wirkung eines Aufpralls verformbare Wand (2) getrennten Raum aufweist, in welchem ein starres Bauteil (1) in einer normalen Position in der Nähe der Wand aufgenommen ist, **dadurch gekennzeichnet, dass** sie Folgendes aufweist:
- einen im Inneren des Raums in unmittelbarer Nähe der Wand angeordneten Detektor (3) der Position der Wand, der dafür eingerichtet ist, sich unter der Schubkraft derselben, wenn sie sich verformt, zu verschieben, praktisch ohne Widerstand entgegenzusetzen,
- Verriegelungsmittel (7) zum Halten des Bauteils in der normalen Position,
- Entriegelungsmittel (10), die auf die Verschiebung des Detektors reagieren, um die Verriegelungsmittel freizugeben, und
- Antriebsmittel (11), die auf das Bauteil einwirken, um es von der Wand zu entfernen, wenn die Verriegelungsmittel freigegeben werden.

2. Vorrichtung nach Anspruch 1, wobei der Raum der Motorraum des Fahrzeugs ist.

3. Vorrichtung nach Anspruch 2, wobei die Wand eine Öffenbare Haube (2) ist, die den Motorraum abdeckt.

4. Vorrichtung nach einem der vorhergehenden Ansprüche, wobei die Verschiebung des Detektors unter der Schubkraft der Wand von oben nach unten erfolgt.

5. Vorrichtung nach einem der vorhergehenden Ansprüche, wobei die Verschiebung des Bauteils unter der Einwirkung der Antriebsmittel von oben nach unten erfolgt.

6. Vorrichtung nach einem der vorhergehenden Ansprüche, wobei das Bauteil mindestens einen Wärmetauscher umfasst.

7. Vorrichtung nach einem der vorhergehenden Ansprüche, wobei der Detektor eine Stange (3) aufweist, die sich entlang der Wand erstreckt.

8. Vorrichtung nach einem der vorhergehenden Ansprüche, wobei die Verriegelungsmittel mindestens einen Riegel (7) aufweisen, der durch eine Feder (8) in einer Sperrposition gehalten wird.

9. Vorrichtung nach Anspruch 8, wobei der Riegel in einer Richtung gleitet, die im Wesentlichen zu der Verschiebungsrichtung des Detektors senkrecht ist.

10. Vorrichtung nach einem der vorhergehenden Ansprüche, wobei die Antriebsmittel durch Entspannung mindestens einer Feder (11) wirken.

11. Vorrichtung nach einem der vorhergehenden Ansprüche, wobei die Entriegelungsmittel mindestens einen Mechanismus (10) aufweisen, der die Verschiebung des Detektors in eine Bewegung zur Freigabe der Verriegelungsmittel umwandelt.

12. Vorrichtung nach einem der Ansprüche 1 bis 10, wobei die Entriegelungsmittel mindestens einen Elektromagneten (12) und einen Schalter (11), der durch die Verschiebung des Detektors betätigt wird, um die Stromversorgung des Elektromagneten zu ermöglichen, aufweisen.

## Claims

1. Device mounted on a vehicle for protecting pedestrians in the event of a collision with the vehicle, the latter comprising a compartment separated from the outside of the vehicle by a wall (2) that can be deformed under the effect of a collision, in which a rigid component (1) is housed in a normal position in the vicinity of said wall, **characterized in that** it comprises:
- a detector (3) of the position of the wall arranged inside the compartment in immediate proximity to the wall, specifically for being displaced under the thrust thereof when it is deformed, practically without offering any resistance,
- locking means (7) for securing the component in said normal position,
- unlocking means (10) reacting to the displacement of the detector to release the locking means, and
- driving means (11) acting on the component to move it away from the wall when the locking means are released.

2. Device according to Claim 1, in which said compartment is the engine compartment of the vehicle.

3. Device according to Claim 2, in which said wall is an opening lid (2) covering the engine compartment.

4. Device according to one of the preceding claims, in which the displacement of the detector under the thrust of the wall takes place downwards.

5. Device according to one of the preceding claims, in which the displacement of the component under the action of the driving means takes place downwards.

6. Device according to one of the preceding claims, in which said component comprises at least one heat exchanger.

7. Device according to one of the preceding claims, in which the detector comprises a bar (3) extending along the wall.

8. Device according to one of the preceding claims, in which the locking means comprise at least one lock (7) kept in the immobilizing position by a spring (8).

9. Device according to Claim 8, in which said lock slides in a direction substantially at right angles to the direction of displacement of the detector.

10. Device according to one of the preceding claims, in which the driving means act by the release of at least one spring (11).

11. Device according to one of the preceding claims, in which the unlocking means comprise at least one mechanism (10) converting the displacement of the detector into a movement releasing the locking means.

12. Device according to one of Claims 1 to 10, in which the unlocking means comprise at least one electromagnet (12) and one switch (11) actuated by the displacement of the detector to allow the electromagnet to be powered.
